# EUROPÄISCHE PATENTANMELDUNG

(11) **EP 4 282 704 A1**
(43) Veröffentlichungstag der Anmeldung: **29.11.2023**
(21) Anmeldenummer: 23163121.9
(22) Anmeldetag: 21.03.2023
(51) Int. Cl.: B60P 1/44

(54) **VORRICHTUNG ZUM BEEINFLUSSEN EINES FALTVORGANGS EINER FALTBAREN PLATTFORM, FALTBARE PLATTFORM WELCHE DIE VORRICHTUNG UMFASST**

(30) Priorität: 20.05.2022 DE 102022112753
(71) Anmelder: Bär Management- und Beteiligungsgesellschaft mbH, 74078 Heilbronn (DE)
(72) Erfinder: Förch, Dr. Peter, 67435 Neustadt an der Weinstraße (DE)
(74) Vertreter: DREISS Patentanwälte PartG mbB

(57) **Zusammenfassung**

Vorrichtung (106) zum Beeinflussen eines Faltvorgangs einer faltbaren Plattform (100), wobei die faltbare Plattform (100) einen Festteil (102) und einen Faltteil (104) umfasst wobei die Vorrichtung (106) ein Doppelgelenk (112) umfasst, wobei das Doppelgelenk (112) mit einem ersten Ende an dem Festteil (102) und mit einem zweiten Ende an dem Faltteil (104) anordenbar oder angeordnet ist, eine Synchronisierungseinrichtung (114) umfasst, die ein erste Synchronisierungselement (116) und ein zweites Synchronisierungselement (118) umfasst, wobei die Synchronisierungseinrichtung (114) ausgebildet ist den Faltvorgang der Plattform (100), mittels des ersten Synchronisierungselements (116), welches in Wechselwirkung mit dem zweiten Synchronisierungselement (118) steht, derart zu beeinflussen, dass Bewegungen des Festteils (102), des Faltteils (104) und des Doppelgelenks (112) relativ zueinander synchronisiert sind. Faltbare Plattform, welche die Vorrichtung umfasst.

## Beschreibung

Die Erfindung betrifft eine Vorrichtung zum Beeinflussen eines Faltvorgangs einer faltbaren Plattform und eine faltbare Plattform welche die Vorrichtung umfasst und die beispielsweise an einem Lastkraftwagen vorgesehen ist und zum Heben und Senken von Ladungen eingesetzt werden kann.

Bei faltbaren Plattformen, die mittels Doppelgelenken arbeiten, sind die einzelnen zu faltenden Elemente der Plattform sowie das Doppelgelenk unabhängig voneinander bewegbar. Das führt zu undefinierten Stellungen des Gelenks und der Elemente. Je nach Reibungs- beziehungsweise Lastsituation ergeben sich verschiedene Zustände der Plattform. Demnach ist ein Automatisieren des Faltvorgangs oder eine Gewichtskompensation erschwert möglich.

Folglich ist eine faltbare Plattform wünschenswert, die einen definierten Faltvorgang aufweist und ein Automatisieren und eine Gewichtskompensation ermöglicht.

Diese Aufgabe wird durch eine Vorrichtung zum Beeinflussen eines Faltvorgangs einer faltbaren Plattform gelöst, wobei die faltbare Plattform einen Festteil und einen Faltteil umfasst, wobei die Vorrichtung ein Doppelgelenk umfasst, wobei das Doppelgelenk mit einem ersten Ende an dem Festteil und mit einem zweiten Ende an dem Faltteil anordenbar oder angeordnet ist, eine Synchronisierungseinrichtung umfasst, die ein erstes Synchronisierungselement und ein zweites Synchronisierungselement umfasst, wobei die Synchronisierungseinrichtung ausgebildet ist den Faltvorgang der Plattform, mittels des ersten Synchronisierungselements, welches in Wechselwirkung mit dem zweiten Synchronisierungselement steht, derart zu beeinflussen, dass Bewegungen des Festteils, des Faltteils und des Doppelgelenks relativ zueinander synchronisiert sind. Dadurch wird ein definierter Faltvorgang zwischen Festteil, Faltteil und Doppelgelenk ermöglicht. Dies ist insbesondere auch unter Last gewährleistet. Zudem wird es ermöglicht, einen Linearaktor, wie beispielsweise einen Hydraulikzylinder zwischen dem Festteil und dem Doppelgelenk anzuordnen, ohne dabei eine Totpunktlage des Linearaktors zu erreichen. Des Weiteren wird es ermöglicht, eine Gewichtskompensation des Faltteils umzusetzen.

Vorzugsweise umfasst die Vorrichtung eine Antriebseinrichtung, wobei die Antriebseinrichtung einen Antrieb und eine Koppeleinrichtung zum Koppeln der Antriebseinrichtung mit dem Doppelgelenk umfasst und die Antriebseinrichtung ausgebildet ist, das Doppelgelenk durch den Antrieb mittels der Koppeleinrichtung anzutreiben. Somit wird ein automatisierter Faltvorgang der Plattform ermöglicht.

Vorzugsweise umfasst das Festteil eine erste Welle und das Faltteil eine zweite Welle, wobei das Doppelgelenk mit einem ersten Ende an der ersten Welle und mit einem zweiten Ende an der zweiten Welle anordenbar oder angeordnet ist, und die Koppeleinrichtung oder das Doppelgelenk einen Koppelabschnitt umfasst, der exzentrisch bezüglich der ersten Welle angeordnet ist, insbesondere von einer Arbeitsfläche der Plattform in einem geöffneten Zustand der Plattform abgewandt orientiert, wobei die Antriebseinrichtung ausgebildet ist, das Doppelgelenk durch den Antrieb mittels des Koppelabschnitts rotatorisch um die erste Welle anzutreiben. Durch diese Anordnung des Koppelabschnitts entsteht ein kurzer Verfahrweg der Antriebeinrichtung, welcher während des Faltvorgangs zurückgelegt werden muss und die Koppeleinrichtung ist vor einem Überfahren geschützt.

Vorzugsweise ist das erste Synchronisierungselement starr an dem Festteil angeordnet und das zweite Synchronisierungselement starr an dem Faltteil angeordnet.

Vorzugsweise sind das erste Synchronisierungselement und das zweite Synchronisierungselement ausgebildet, derart zusammenzuwirken, dass sich das Faltteil relativ zum Festteil um einen Faltwinkel bewegt, wobei sich das Doppelgelenk dabei um einen Winkel bewegt, der halb so groß ist wie der Faltwinkel. Dadurch ist gewährleistet, dass eine Arbeitsfläche des Festteils und eine Arbeitsfläche des Faltteils während des Faltvorgangs der Plattform einen Zustand erreichen, in welchem die Arbeitsfläche des Festteils und die Arbeitsfläche des Faltteils einer Ebene liegen. Somit entsteht eine zusammengesetzte Arbeitsfläche aus der Arbeitsfläche des Festteils und der Arbeitsfläche des Faltteils ohne einen Versatz, was ein Arbeiten eines Bedieners auf der Plattform sicherer gestaltet.

Vorzugsweise umfasst die Vorrichtung zumindest ein Mittel für eine Gewichtskompensation des Faltteils, insbesondere eine Gasdruckfeder. Dadurch wird eine notwendige Antriebskraft für den Faltvorgang der Plattform reduziert.

Vorzugsweise ist das Mittel für die Gewichtskompensation mit einem ersten Ende an dem Festteil anordenbar oder angeordnet oder an dem ersten Synchronisierungselement angeordnet und mit einem zweiten Ende an dem Faltteil anordenbar oder angeordnet oder an dem zweiten Synchronisierungselement angeordnet.

Vorzugsweise umfasst die Vorrichtung einen Kettentrieb, wobei der Kettentrieb ein erstes Kettenrad und ein zweites Kettenrad sowie eine Kette, die eine Koppelung des ersten und zweiten Kettenrads bewirkt, umfasst, wobei das erste Kettenrad um eine Welle, die sich im Wesentlichen Parallel zur ersten Welle erstreckt, drehbar an dem Festteil oder dem ersten Synchronisierungselement angeordnet ist und das zweite Kettenrad starr an dem Faltteil oder dem zweiten Synchronisierungselement angeordnet ist. Somit ist es möglich, ein Gewichtsmoment des Faltteils vollständig zu kompensieren, da eine Faltbewegung des Faltteils in eine Rotation des ersten Kettenrads umgewandelt wird.

Vorzugsweise ist das Mittel für die Gewichtskompensation mit dem ersten Ende an dem Festteil und mit dem zweiten Ende an dem ersten Kettenrad angeordnet.

Vorzugsweise umfasst die Vorrichtung ein Zahnradpaar, wobei ein erstes Zahnrad des Zahnradpaars drehbar an dem Festteil angeordnet ist und ein zweites Zahnrad des Zahnradpaars starr an dem Faltteil angeordnet ist, wobei das erste und das zweite Zahnrad in Eingriff stehen. Somit ist es möglich ein Gewichtsmoment des Faltteils vollständig zu kompensieren.

Vorzugsweise ist das Mittel für die Gewichtskompensation mit dem ersten Ende an dem Festteil und dem zweiten Ende an dem ersten Zahnrad angeordnet.

Vorzugsweise umfasst die Vorrichtung eine Koppel, insbesondere zwei Koppelstangen, und eine Koppelplatte, wobei die Koppel mit einem Ende an der Koppelplatte angeordnet ist und mit einem zweiten Ende an dem zweiten Synchronisierungselement angeordnet ist, wobei die Koppelplatte drehbar um eine Drehachse, die parallel zu der ersten Welle orientiert ist, angeordnet ist. Somit ist es möglich ein Gewichtsmoment des Faltteils kostengünstig und vollständig zu kompensieren.

Vorzugsweise ist das Mittel für die Gewichtskompensation mit dem ersten Ende an dem Festteil und mit dem zweiten Ende an der Koppelplatte angeordnet ist.

Vorzugsweise umfasst das Mittel für die Gewichtskompensation des Faltteils einen Antrieb, insbesondere einen Spindelantrieb, der ausgebildet ist das Doppelgelenk mittels der Koppel anzutreiben

Vorzugsweise ist die Koppelplatte als ein Kurvensegment ausgebildet.

Vorzugsweise ist das Mittel für die Gewichtskompensation mit dem ersten Ende an dem Festteil und das zweite Ende entlang einer Kurve des Kurvensegments geführt bewegbar angeordnet.

Die faltbare Plattform umfasst den Festteil und den Faltteil und die Vorrichtung.

Vorzugsweise umfasst die faltbare Plattform zumindest ein weiteres Faltteil und zumindest eine weitere Vorrichtung gemäß den vorherigen Ausführungen.

Weitere vorteilhafte Ausführungsformen ergeben sich aus der Zeichnung und der folgenden Beschreibung. In der Zeichnung zeigt:
- Figur 1A-1C: eine schematische Darstellung einer faltbaren Plattform mit einer Vorrichtung zum Beeinflussen eines Faltvorgangs in verschiedenen Zuständen des Faltvorgangs,
- Figur 2: eine schematische Darstellung der faltbaren Plattform mit einer Antriebseinrichtung,
- Figur 3: eine schematische Darstellung der faltbaren Plattform mit einer Ausführungsform der Antriebeinrichtung,
- Figur 4: eine schematische Darstellung der faltbaren Plattform mit einer Ausführungsform der Antriebeinrichtung,
- Figur 5: eine schematische Darstellung der faltbaren Plattform mit einem Mittel für eine Gewichtskompensation gemäß einer ersten Ausführung,
- Figur 6: eine schematische Darstellung der faltbaren Plattform mit dem Mittel für die Gewichtskompensation gemäß einer zweiten Ausführung,
- Figur 7: eine schematische Darstellung der faltbaren Plattform mit dem Mittel für die Gewichtskompensation gemäß einer dritten Ausführung.

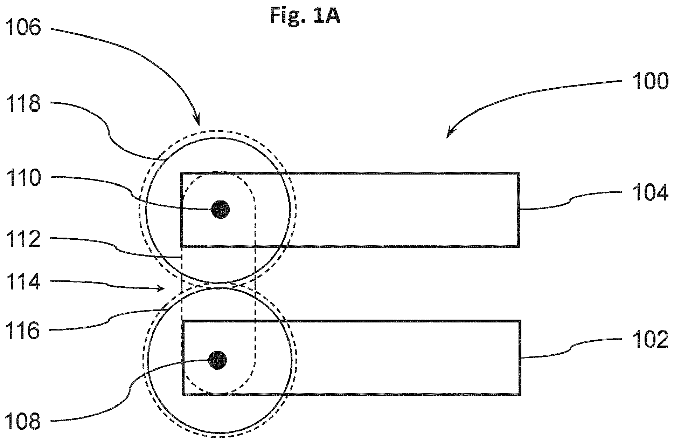

Die Figuren 1A-1C zeigen eine faltbare Plattform 100, die einen Festteil 102, einen Faltteil 104 und eine Vorrichtung 106 zum Beeinflussen eines Faltvorgangs der Plattform 100 umfasst. Die Vorrichtung 106 umfasst wenigstens eine erste Welle 108, wenigstens eine zweite Welle 110, wenigstens ein Doppelgelenk 112 und wenigstens eine Synchronisierungseinrichtung 114.

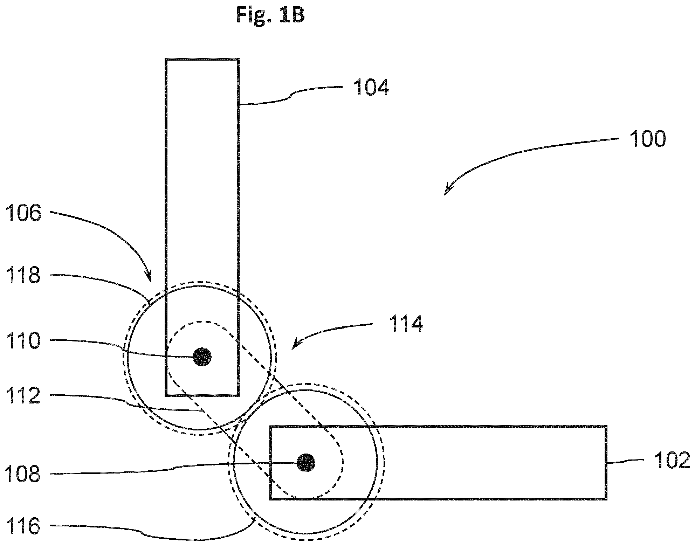

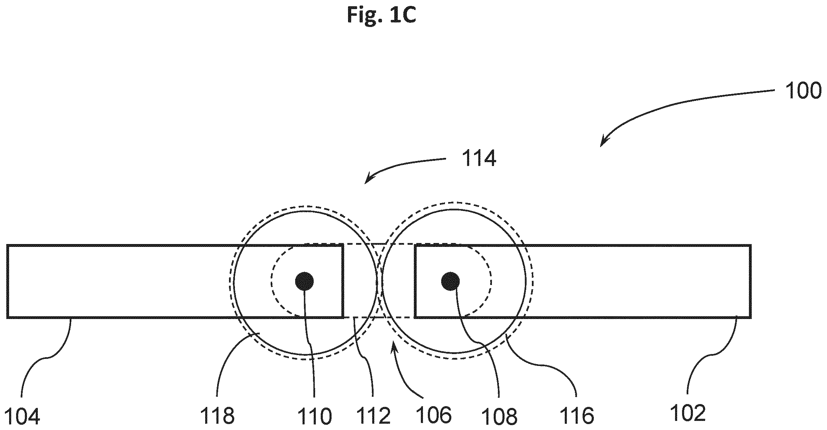

Bei dem Faltvorgang der Plattform 100 bewegt sich im Beispiel das Faltteil 104 relativ zu dem Festteil 102, wobei das Festteil 102 der Plattform 100 beispielsweise an einem Nutzfahrzeug befestigt ist. Es kann vorgesehen sein, dass die Plattform 100 als eine Hubplattform eingesetzt wird. Die Plattform 100 ist ausgebildet eine Faltbewegung auf einem Faltwinkelbereich im Beispiel von 0° bis 180° auszuführen. Dies ist in den Figuren 1A, 1B und 1C schematisch dargestellt. Wobei die Figur 1A einen Faltwinkel von 0° sowie einen Zustand einer geschlossenen Plattform 100 darstellt, die Figur 1B einen Faltwinkel von 90° darstellt und die Figur 1C einen Faltwinkel von 180° darstellt. Figur 1C stellt im Beispiel einen geöffneten Zustand der Plattform 100 dar. Es können jedoch auch andere Faltwinkelbereiche im Bereich von 0° bis 360° vorgesehen sein.

Die Synchronisierungseinrichtung 114 umfasst ein erstes Synchronisierungselement 116 und ein zweites Synchronisierungselement 118, die insbesondere als Zahnräder ausbildet sind. Die Synchronisierungselemente 116 und 118 können alternativ als Kurven, Reibräder, Kettenräder oder Zahnradsegmente ausgebildet sein. Das erste Synchronisierungselement 116 und das zweite Synchronisierungselement 118 stehen während des Faltvorgangs in Wechselwirkung. Es kann vorgesehen sein, dass das erste Synchronisierungselement 116 und das zweite Synchronisierungselement 118 als Kettenrad ausgebildet ist, wobei die Synchronisierungselemente 116 und 118 mittels einer Kette in Wechselwirkung zueinanderstehen.

Die erste Welle 108 ist zumindest teilweise innerhalb des Festteils 102 angeordnet und verläuft entlang einer Außenseite des Faltteils 102.

Die zweite Welle 110 ist zumindest teilweise innerhalb des Faltteils 104 angeordnet und verläuft entlang einer Außenseite des Faltteils 104. Die Außenseite des Festteils 102 und die Außenseite des Faltteils 104 sind für einen Faltwinkel von 0° gleich orientiert, d.h. in derselben Ebene angeordnet, und für einen Faltwinkel von 180° sich gegenseitig zugewandt.

Im Beispiel ist die erste Welle 108 verdrehfest um eine Rotationsachse, die sich in axialer Richtung der ersten Welle 108 erstreckt, in dem Festteil 102 angeordnet. Zudem ist im Beispiel die zweite Welle 110 verdrehfest um eine Rotationsachse, die sich in axialer Richtung der zweiten Welle 110 erstreckt, in dem Faltteil 104 angeordnet. Die erste Welle 108 und die zweite Welle 110 sind beispielsweise mittels Spannstiften oder Passfedern in dem Festteil 102 beziehungsweise dem Faltteil 104 entsprechend fixiert. Es kann vorgesehen sein, dass die erste Welle 108 und die zweite Welle 110 als Polygonwellen oder Keilwellen ausgebildet sind und entsprechend verdrehfest in dem Festteil 102 beziehungsweise dem Faltteil 104 angeordnet sind. Zudem ist eine translatorische Bewegung der ersten Welle 108 und zweite Welle 110 entlang der Rotationsachse beschränkt, beispielsweise mittels Spannstiften oder Verschraubungen.

Es kann vorgesehen sein, dass die erste Welle 108 und die zweite Welle 110 um die Rotationachse verdrehbar in dem Festteil 102 beziehungsweise dem Faltteil 104 angeordnet sind.

Das Doppelgelenk 112 ist mit einem ersten Ende drehbar um die Rotationsachse der ersten Welle 108 an der ersten Welle 108 angeordnet und mit einem zweiten Ende drehbar um die Rotationsachse der zweiten Welle 110 an der zweiten Welle 110 angeordnet. Im Beispiel ist das Doppelgelenk 112 über eine Bohrung in dem Doppelgelenk 112, durch die die erste Welle 108 verläuft, und eine Bohrung in dem Doppelgelenk 112, durch die die zweite Welle 110 verläuft, mit der ersten Welle 108 und der zweiten Welle 110 verbunden.

Es kann vorgesehen sein, für den Fall, dass die erste Welle 108 drehbar um die Rotationsachse der ersten Welle 108 im Festteil 102 und die zweite Welle 110 drehbar um die Rotationsachse der zweiten Welle 110 im Faltteil 104 angeordnet sind, dass das Doppelgelenk 112 verdrehfest um die Rotationsachsen der ersten Welle 108 und der zweiten Welle 110 an der ersten Welle 108 und der zweiten Welle 110 angeordnet ist. Dies kann beispielsweise mittels einer Welle-Nabe-Verbindung, einer Keilwellenverbindung, durch Spannstifte, Passfedern oder einer Polygonverbindung umgesetzt werden.

Das Doppelgelenk 112 stellt somit eine mechanische Verbindung zwischen dem Festteil 102 und dem Faltteil 104 der Plattform 100 dar, wodurch der Faltvorgang der Plattform 100 ermöglicht wird sowie relative Bewegungen zwischen dem Festteil 102, dem Faltteil 104 und dem Doppelgelenk 112 möglich sind.

Zudem kann vorgesehen sein, dass eine Vielzahl an Doppelgelenken an der ersten Welle 108 beziehungsweise der zweiten Welle 110 angeordnet ist und die mechanische Verbindung zwischen dem Festteil 102 und dem Faltteil 104 umsetzt. Des Weiteren können auch eine Vielzahl an Wellen in dem Festteil 102 und dem Faltteil 104 vorgesehen sein, an der die Vielzahl an Doppelgelenken angeordnet ist.

Das erste Synchronisierungselement 116 ist starr an dem Festteil 102 angeordnet. Im Beispiel ist das erste Synchronisierungselement 116 starr an der ersten Welle 108 angeordnet, welche im Beispiel verdrehfest und in der translatorischen Bewegung beschränkt in dem Festteil 102 angeordnet ist. Im Beispiel ist ein Mittelpunkt des ersten Synchronisierungselements 116 fluchtend auf der Rotationsachse der ersten Welle 108 angeordnet.

Das zweite Synchronisierungselement 118 ist starr an dem Faltteil 104 angeordnet. Im Beispiel ist das zweite Synchronisierungselement 118 starr an der ersten Welle 110 angeordnet, welche im Beispiel verdrehfest und in der translatorischen Bewegung beschränkt in dem Faltteil 104 angeordnet ist. Im Beispiel ist ein Mittelpunkt des zweiten Synchronisierungselements 118 fluchtend auf der Rotationsachse der zweiten Welle 110 angeordnet.

Das erste Synchronisierungselement 116 ist beispielsweise mittels einer Welle-Nabe-Verbindung, einer Keilwellenverbindung, durch Spannstifte, Passfedern oder einer Polygonverbindung an der ersten Welle 108 angeordnet. Das zweite Synchronisierungselement 118 ist beispielsweise mittels einer Welle-Nabe-Verbindung, einer Keilwellenverbindung, durch Spannstifte, Passfedern oder einer Polygonverbindung an der zweiten Welle 110 angeordnet.

Es kann vorgesehen sein, dass das erste Synchronisierungselement 116 und das zweite Synchronisierungselement 118 direkt an dem Festteil 102 beziehungsweise dem Faltteil 104 angeordnet sind.

Es kann vorgesehen sein, dass das erste Synchronisierungselement 116 mit einer ersten separaten Welle an dem Festteil 102 angeordnet ist und das zweite Synchronisierungselement 118 mit einer zweiten separaten Welle an dem Faltteil 104 angeordnet ist.

Aufgrund des starr an dem Festteil 102 und Faltteil 104 angeordneten in Wechselwirkung stehenden ersten Synchronisierungselements 116 und zweiten Synchronisierungselements 118 wird der Faltvorgang dahingehend beeinflusst, dass eine relative Bewegung des Festteils 102, des Faltteils 104 und des Doppelgelenks 112 synchronisiert ist. Synchronisiert bedeutet in diesem Kontext, dass jedem Faltwinkel des Faltwinkelbereichs eine bestimmte Winkelstellung des Doppelgelenks zugeordnet ist. Dadurch wird ein Verklemmen oder Verschieben des Festteils 102 bezüglich des Faltteils 104 und des Doppelgelenks 112 verhindert. Bei einem zurückgelegten Faltwinkel des Faltteils 104 von beispielsweise 90° hat das Doppelgelenk einen Winkel von 45° zurückgelegt, wie in Figur 1B dargestellt, bei einem Faltwinkel des Faltteils 104 von 180° hat das Doppelgelenk einen Winkel von 90° zurückgelegt, wie in Figur 1C dargestellt. Dieses Verhältnis zwischen dem Faltwinkel und der Winkelstellung des Doppelgelenks 112 ist durch eine Dimensionierung der in Wechselwirkung stehenden Synchronisierungselement 116 und 118 beeinflussbar. Im Beispiel sind die Synchronisierungselemente 116 und 118 identisch dimensioniert, wodurch das im obigen beschriebene Verhältnis zwischen Faltwinkel und Winkelstellung des Doppelgelenks 112 resultiert. Beispielsweise bei einer Verwendung von Zahnrädern als Synchronisierungselemente 116 und 118 weisen diese im Beispiel eine 1:1 Übersetzung auf.

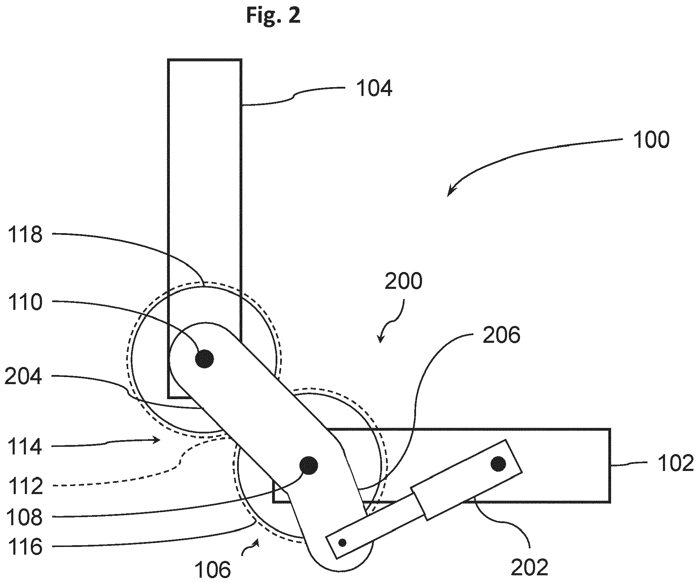

Die Figur 2 zeigt die Plattform 100 und die Vorrichtung 106 zum Beeinflussen des Faltvorgangs der Plattform 100 der Figuren 1A, 1B und 1C. Zudem stellt Figur 2 eine Antriebeinrichtung 200 dar. Die Antriebeinrichtung 200 ist ausgebildet das Doppelgelenk 112 anzutreiben. Dadurch kann der Faltvorgang der Plattform 100 mittels der Antriebeinrichtung 200 automatisiert werden. Im Beispiel ist die Antriebseinrichtung 200 an dem Festteil 102 angeordnet. Es kann vorgesehen sein, die Antriebseinrichtung 200 an dem Faltteil 104 anzuordnen.

Die Antriebseinrichtung 200 umfasst einen Antrieb 202 und eine Koppeleinrichtung 204. In der Figur 2 ist der Antrieb 202 als ein Antriebszylinder ausgebildet. Die Koppeleinrichtung 204 ist als ein Koppelsegment ausgebildet, das den Koppelabschnitt 206 umfasst, an welchem ein erstes Ende des Antriebszylinders angeordnet ist. Ein zweites Ende des Antriebszylinders ist im Beispiel an dem Festteil 104 angeordnet. Die Koppeleinrichtung 204 ist im Beispiel mit einem ersten Ende drehbar an dem Festteil 102 durch eine Welle angeordnet, dessen Längsachse entlang der Rotationsachse der ersten Welle 108 verläuft. Die Koppeleinrichtung 204 ist im Beispiel mit einem zweiten Ende drehbar an dem Faltteil 104 durch eine Welle angeordnet, dessen Längsachse entlang der Rotationsachse der zweiten Welle 110 verläuft. Im Beispiel ist der Koppelabschnitt 206 als ein Hebel ausgestaltet, der bezüglich des ersten Endes der Koppeleinrichtung 204 als exzentrischer Abschnitt vorgesehen ist. Durch diese Ausgestaltung ist es unter anderem möglich kompakte Antriebszylinder zu verbauen. Im Beispiel ist der Hebel derart angeordnet, dass dieser in dem geöffneten Zustand der Plattform 100 von einer Arbeitsfläche der Plattform 100 wegorientiert ist. Dadurch ist die Koppeleinrichtung 204 beispielsweise vor Überfahrschäden geschützt. Es kann vorgesehen sein, dass der Koppelabschnitt 206 als ein Hebel ausgestaltete ist, der exzentrisch bezüglich des zweiten Endes der Koppeleinrichtung 204 ausgebildet ist.

In dieser Ausführungsform wird durch eine lineare Bewegung des Antriebs 202 beziehungsweise des Antriebszylinders eine rotatorische Bewegung der Koppeleinrichtung 204 hervorgerufen, die einen Momentanpol aufweist, welcher auf der Rotationsachse der ersten Welle 108 liegt. Aufgrund dieser rotatorischen Bewegung der Koppeleinrichtung 204 entsteht, aufgrund der mechanischen Verbindung des Doppelgelenks 112 mit dem Festteil 102 und dem Faltteil 104, eine Rotationsbewegung des Doppelgelenks 112, die eine Winkelstellung des Doppelgelenks 112 erzeugt, wodurch ein bestimmter Faltwinkel des Faltteils 104, aufgrund der durch die Synchronsiereinrichtung 114 synchronisierten Bewegungen des Festteils 104, des Doppelgelenks 112 und des Faltteils 104, resultiert.

Es kann vorgesehen sein, dass der Koppelabschnitt 206 an dem Doppelgelenk 112 vorgesehen ist und das erste Ende des Antriebs 202 entsprechend an dem Koppelabschnitt 206 des Doppelgelenks 112 angeordnet ist. In dieser Ausführung kann von der Koppeleinrichtung 204 abgesehen werden, da der Antrieb 202 das Doppelgelenk 112 direkt antreibt.

Vorzugsweise ist das erste Ende des Antriebszylinders in einem Bereich des Koppelabschnitts 206 angeordnet, der nicht von der zweiten Welle 110 oder einer gedachten Verlängerung der zweiten Welle 110 durchstoßen wird, um eine Totpunktlage des Antriebs 202 zu vermeiden. Zudem ist der Koppelabschnitt 206 im Beispiel derart ausgebildet, dass das erste Ende des Antriebszylinders an diesem so angeordnet werden kann, dass eine gedachte Wirkrichtung des Antriebszylinders die Rotationsachse der ersten Welle 108 nicht kreuzt, um eine Funktion der Antriebeinrichtung zu gewährleisten.

Die Antriebseinrichtung 200 kann ausgebildet sein wenigstens ein Doppelgelenk 112 der Vielzahl an Doppelgelenken und/oder wenigstens eine Koppeleinrichtung 204 anzutreiben.

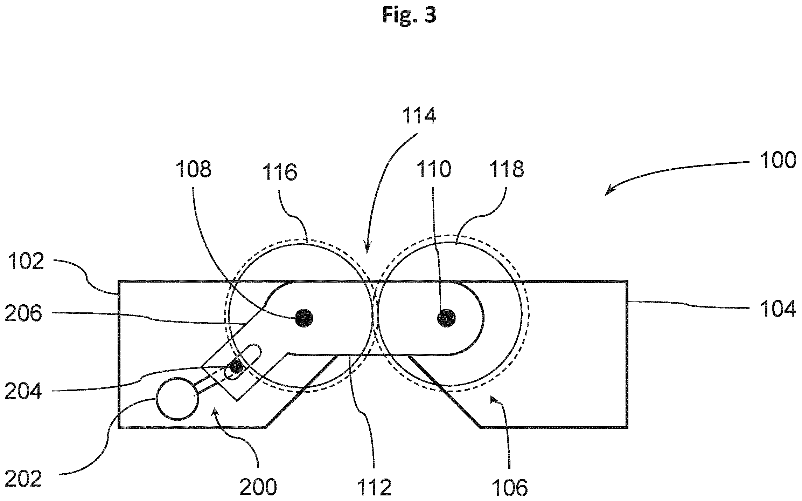

Die Figur 3 zeigt die Plattform 100 und die Vorrichtung 106 zum Beeinflussen des Faltvorgangs der Plattform 100 mit der Antriebeinrichtung 200 der Figuren 2. In der Figur 3 ist eine Ausführungsform der Antriebseinrichtung 200 dargestellt. In dieser Ausführungsform ist der Antrieb 202 als ein Elektromotor ausgebildet. An dem Antrieb 202 ist ein Hebelarm mit einem Zapfen angeordnet, wobei der Zapfen in einer Führungsnut geführt wird. Der Zapfen und die Führungsnut bilden im Beispiel die Koppeleinrichtung 204. Die Führungsnut ist an dem Koppelabschnitt 206, welcher im Beispiel an dem Doppelgelenks 112 vorgesehen ist, angeordnet. Der Koppelabschnitt 206 ist starr mit dem Doppelgelenk 112 verbunden und an dem ersten Ende des Doppelgelenks 112 vorgesehen.

Mittels der Koppeleinrichtung 204 und dem Koppelabschnitt 206 wird eine Bewegung des Antriebs 200 in eine Rotationsbewegung des Doppelgelenks 112 umgewandelt. Die Rotationsbewegung des Doppelgelenks 112 hat im Beispiel einen Momentanpol, welcher in der ersten Welle 108 liegt.

Diese Rotationsbewegung erzeugt eine Winkelstellung des Doppelgelenks 112, wodurch ein bestimmter Faltwinkel des Faltteils 104, aufgrund der durch die Synchronsiereinrichtung 114 synchronisierten Bewegungen des Festteils 104, des Doppelgelenks 112 und des Faltteils 104, resultiert.

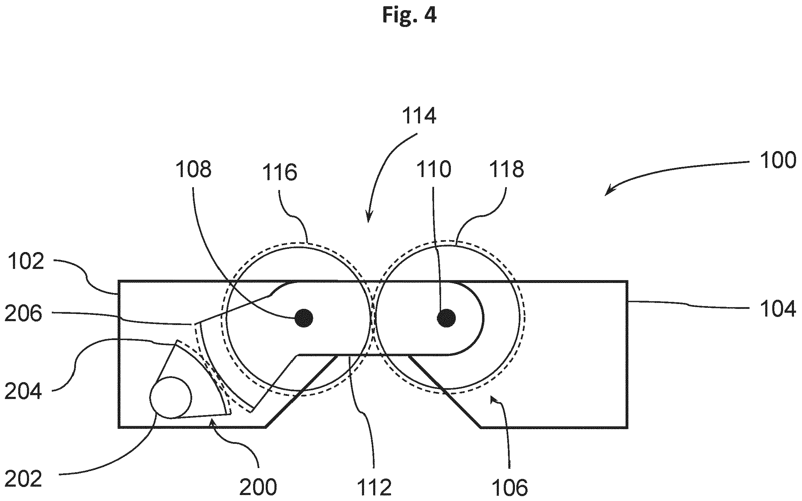

Die Figur 4 zeigt die Plattform 100 und die Vorrichtung 106 zum Beeinflussen des Faltvorgangs der Plattform 100 mit der Antriebseinrichtung 200 der Figur 3. In Figur 4 ist eine Ausführungsform der Antriebseinrichtung 200 dargestellt. In dieser Ausführungsform ist der Antrieb 202 als Elektromotor ausgebildet und die Koppeleinrichtung 204 als Zahnradsegmente. Der Koppelabschnitt 206 des Doppelgelenks 112 umfasst dementsprechend ein Zahnradsegment.

Der Koppelabschnitt 206 und das Doppelgelenk 112 sind gemäß den Ausführungsformen, die durch die Figuren 3 und 4 illustriert sind, im Beispiel einstückig ausgebildet. Der Koppelabschnitt 206 und die Koppeleinrichtung 204 beziehungsweise das Doppelgelenk 112 sind gemäß der Ausführungsform, die durch die Figur 2 illustriert ist, im Beispiel einstückig ausgebildet.

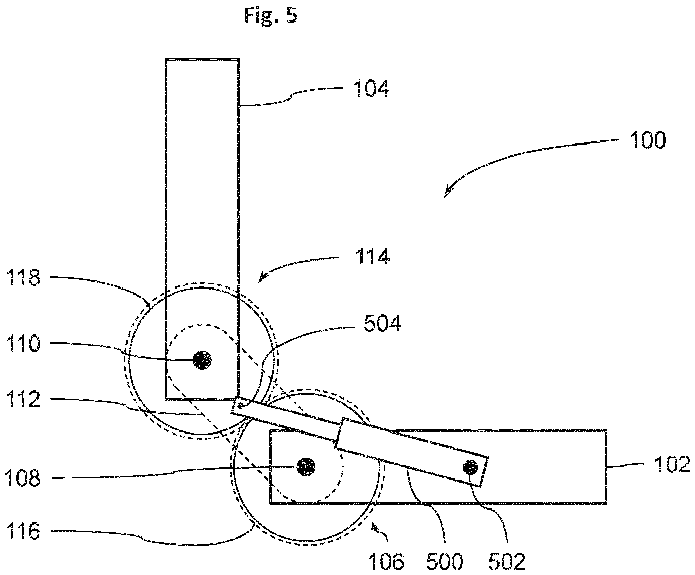

Die Figur 5 zeigt die Plattform 100 und die Vorrichtung 106 zum Beeinflussen des Faltvorgangs der Plattform 100 der Figuren 1A bis 1C mit einem Mittel für eine Gewichtskompensation in Form einer Gasdruckfeder 500. Zur Veranschaulichung ist die Antriebseinrichtung 200 der Figuren 2 bis 4 nicht dargestellt, diese kann jedoch ebenfalls vorgesehen sein.

Die Gasdruckfeder 500 dient dazu, eine Gewichtskraft des Faltteils 104, welche während des Faltvorgangs ein Gewichtsmoment bezüglich eines Drehpunkts des Faltvorgangs erzeugt, zu kompensieren.

Die Gasdruckfeder 500 ist mit einem ersten Ende 502 an dem Festteil 102 angeordnet. Es kann vorgesehen sein, dass das erste Ende 502 an dem ersten Synchronisierungselement 116 angeordnet ist.

Die Gasdruckfeder 500 ist mit einem zweiten Ende 504 an dem zweiten Synchronisierungselement 118 angeordnet. Es kann vorgesehen sein, dass die Gasdruckfeder 500 an dem Faltteil 104 angeordnet ist.

Es kann vorgesehen sein, dass das zweite Ende 504 der Gasdruckfeder 500 an einem Hebelarm angeordnet, welcher starr an dem zweiten Synchronisierungselement 118 oder dem Faltteil 104 angeordnet ist. Der Hebelarm hat vorzugsweise eine Länge, die dem Abstand der ersten Welle 108 und zweiten Welle 110 entspricht. Der Hebelarm ist vorzugsweise an dem zweiten Synchronisierungselement 118 in einem Winkel angeordnet, der bei geschlossenem Zustand der Plattform 100, 315° beträgt. Dieser Winkel ist ausgehend von einer Rotationsbewegung des Faltteils 104, beziehungsweise des zweiten Synchronisierungselements 118, um die zweite Welle 110 beginnend bei einem Kontaktpunkt des ersten und zweiten Synchronisierungselements 116 und 118 in dem geschlossenen Zustand der Plattform 100 angegeben.

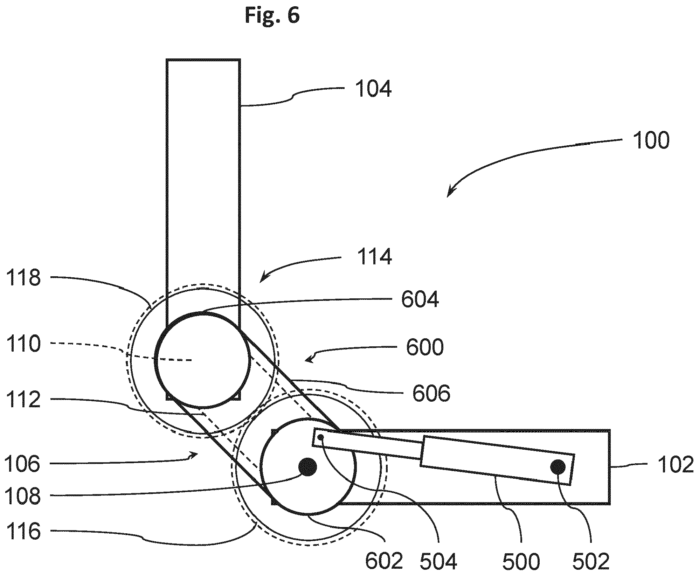

Die Figur 6 zeigt die Plattform 100 der Figur 5 mit einer Ausführungsform bezüglich einer Anbringung des Mittels für die Gewichtskompensation in Form der Gasdruckfeder 500. Diese Ausführungsform umfasst einen Kettentrieb 600 mit einem ersten Kettenrad 602, einem zweiten Kettenrad 604 und eine Kette 606.

Das erste Kettenrad 602 ist drehbar um die Rotationsachse der ersten Welle 108 an dem Festteil 102 oder dem ersten Synchronisierungselement 116 angeordnet. Das zweite Kettenrad 604 ist starr mit dem Faltteil 104 oder dem zweiten Synchronisierungselement 118 angeordnet.

Die Kette 606 koppelt das erste Kettenrad 602 und das zweite Kettenrad 604 miteinander. Während des Faltvorgangs der Plattform 100 wird das erste Kettenrad 606 mittels der Kette 606 dementsprechend in eine Drehbewegung versetzt.

Die Gasdruckfeder 500 ist mit dem ersten Ende 502 an dem Festteil 102 und mit dem zweiten Ende 504 an dem ersten Kettenrad 602 angeordnet. Vorzugsweise wird das zweite Ende 504 der Gasdruckfeder 500 nicht in einer Drehachse des ersten Kettenrades 602 angeordnet.

Es kann vorgesehen sein, dass der Kettentrieb 600 als Zahnradpaar ausgebildet ist, wobei das erste Kettenrad 602 als ersten Zahnrad und das zweite Kettenrad 04 als zweites Zahnrad ausgebildet ist. Dementsprechend stehen das erste Zahnrad und das zweite Zahnrad in Eingriff.

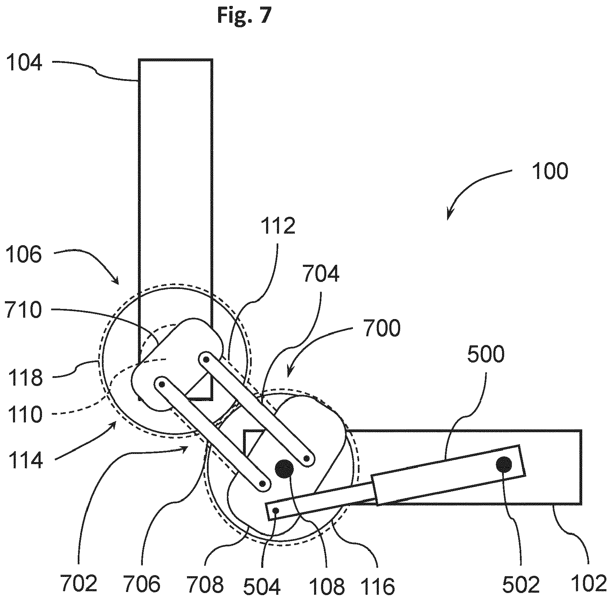

Die Figur 7 zeigt die Plattform der Figur 6 mit einer weiteren Ausführungsform bezüglich der Anbringung des Mittels für die Gewichtskompensation in Form der Gasdruckfeder 500. Diese Ausführungsform umfasst ein Koppelmittel 700. Das Koppelmittel 700 umfasst eine Koppel 702, die im Beispiel eine erste Koppelstange 704 und eine zweite Koppelstange 706 umfasst. Es kann auch eine andere Anzahl an Koppelstangen vorgesehen sein. Des Weiteren umfasst die Koppeleinrichtung 700 eine Koppelplatte 708, die drehbar um die Rotationsachse der ersten Welle 108 an dem Festteil 102 oder dem ersten Synchronisierungselement 116 angeordnet ist und eine Lagerplatte 710, die starr an dem Faltteil 104 oder an dem zweiten Synchronisierungselement 118 angeordnet ist.

Die erste Koppelstange 704 und die zweite Koppelstange 706 sind mit je einem ersten Ende an der Lagerplatte 710 und mit je einem zweiten Ende an der Koppelplatte 708 angeordnet. Es kann vorgesehen sein, dass die erste Koppelstange 704 und/oder die zweite Koppelstange 706 mit je ihrem zweiten Ende direkt an dem zweiten Synchronisierungselement 118 oder direkt an dem Faltteil 104 angeordnet sind. Die erste und zweite Koppelstange 704 und 706 sind derart ausgebildet, dass diese die eine gleiche Länge aufweisen. Zudem sind die erste Koppelstange 704 und die zweite Koppelstange 706 derart angeordnet, dass diese parallel zueinander verlaufen.

Es kann vorgesehen sein, dass die erste Koppelstange 704 an einer ersten Seitenwand der Plattform 100, die orthogonal zu der ersten beziehungsweise zweiten Rotationsachse der ersten beziehungsweise zweiten Welle 108 und 110 orientiert ist, angeordnet ist und die zweite Koppelstange 706 an einer zweiten Seitenwand der Plattform 100, welche parallel zu der ersten Seitenwand orientiert ist, angeordnet ist.

Während des Faltvorgangs der Plattform 100 wird die Koppelplatte 708 des Koppelmittels 700 in eine Rotationsbewegung um die Rotationsachse der ersten Welle 108 versetzt.

Die Gasdruckfeder 500 ist im Beispiel mit dem ersten Ende 502 an dem Festteil 102 und mit dem zweiten Ende 504 an der Koppelplatte 708 angeordnet.

Es kann vorgesehen sein, dass die Gasdruckfeder 500 als Antrieb, insbesondere als Spindelantrieb, ausgebildet ist und mittels des Koppelmittels 700 das Doppelgelenk 112 und dementsprechend die Plattform 100 antreibt. Es kann vorgesehen sein, dass in diesem Beispiel der Antrieb zudem als Mittel für die Gewichtskompensation eingesetzt wird.

Die Plattform 100 mit der Vorrichtung 106 ist im Wesentlichen symmetrisch bezüglich einer Symmetrieachse, die parallel zu der ersten Welle 108 und der zweiten Welle 110 orientiert ist und durch das Doppelgelenks 112 verläuft, ausgestaltet. Demnach kann es vorgesehen sein, die Antriebseinrichtung 200 und das Mittel für die Gewichtskompensation in Form der Gasdruckfeder 500 sowie der Ausführungsformen der Anbringung der Gasruckfeder 500 gespiegelt um die Symmetrieachse auszuführen.

Das Weitern kann vorgesehen sein, dass die Plattform 100 eine Vielzahl an Synchronisierungseinrichtungen umfasst, insbesondere zwei, welche jeweils an der ersten Seitenwand und der zweiten Seitenwand der Plattform angeordnet sind.

Es kann zudem vorgesehen sein, dass die Antriebseinrichtung 200 an der ersten Seitenwand der Plattform 100 angeordnet ist und das Mittel für die Gewichtskompensation in Form der Gasdruckfeder 500 gemäß einer der vorherigen Ausführungsformen an der zweiten Seitenwand der Plattform 100 angeordnet ist oder umgekehrt.

## Patentansprüche

1. Eine Vorrichtung (106) zum Beeinflussen eines Faltvorgangs einer faltbaren Plattform (100), wobei die faltbare Plattform (100) einen Festteil (102) und einen Faltteil (104) umfasst, **dadurch gekennzeichnet, dass** die Vorrichtung (106)
ein Doppelgelenk (112) umfasst, wobei das Doppelgelenk (112) mit einem ersten Ende an dem Festteil (102) und mit einem zweiten Ende an dem Faltteil (104) anordenbar oder angeordnet ist,
eine Synchronisierungseinrichtung (114) umfasst, die ein erstes Synchronisierungselement (116) und ein zweites Synchronisierungselement (118) umfasst, wobei die Synchronisierungseinrichtung (114) ausgebildet ist den Faltvorgang der Plattform (100), mittels des ersten Synchronisierungselements (116), welches in Wechselwirkung mit dem zweiten Synchronisierungselement (118) steht, derart zu beeinflussen, dass Bewegungen des Festteils (102), des Faltteils (104) und des Doppelgelenks (112) relativ zueinander synchronisiert sind.

2. Die Vorrichtung (106) nach Anspruch 1, **dadurch gekennzeichnet, dass** die Vorrichtung (106) eine Antriebseinrichtung (200) umfasst, wobei die Antriebseinrichtung (200) einen Antrieb (202) und eine Koppeleinrichtung (204) zum Koppeln der Antriebseinrichtung (200) mit dem Doppelgelenk (112) umfasst und die Antriebseinrichtung (200) ausgebildet ist, das Doppelgelenk (112) durch den Antrieb (200) mittels der Koppeleinrichtung (204) anzutreiben.

3. Die Vorrichtung (106) nach Anspruch 2, **dadurch gekennzeichnet, dass** das Festteil (102) eine erste Welle (108) umfasst und das Faltteil (104) eine zweite Welle (110) umfasst, wobei das Doppelgelenk (112) mit dem ersten Ende an der ersten Welle (108) und mit dem zweiten Ende an der zweiten Welle (110) anordenbar oder angeordnet ist, und die Koppeleinrichtung (204) oder das Doppelgelenk (112) einen Koppelabschnitt (206) umfasst, der exzentrisch bezüglich der ersten Welle (108) angeordnet ist, insbesondere von einer Arbeitsfläche der Plattform 100 in einem geöffneten Zustand der Plattform 100 abgewandt orientiert, wobei die Antriebseinrichtung (200) ausgebildet ist, das Doppelgelenk (112) durch den Antrieb (202) mittels des Koppelabschnitts (206) rotatorisch um die erste Welle (108) anzutreiben.

4. Die Vorrichtung (106) nach einem der vorherigen Ansprüche, **dadurch gekennzeichnet, dass** das erste Synchronisierungselement (116) starr an dem Festteil (102) angeordnet ist und das zweite Synchronisierungselement (118) starr an dem Faltteil (104) angeordnet ist.

5. Die Vorrichtung (106) nach einem der vorherigen Ansprüche, **dadurch gekennzeichnet, dass** das erste Synchronisierungselement (116) und das zweite Synchronisierungselement (118) ausgebildet sind, derart zusammenzuwirken, dass sich das Faltteil (104) relativ zum Festteil (102) um einen Faltwinkel bewegt, wobei sich das Doppelgelenk (112) dabei um einen Winkel bewegt, der halb so groß ist wie der Faltwinkel.

6. Die Vorrichtung (106) nach einem der vorherigen Ansprüche, **dadurch gekennzeichnet, dass** die Vorrichtung zumindest ein Mittel (500) für eine Gewichtskompensation des Faltteils (104), insbesondere eine Gasdruckfeder, umfasst.

7. Die Vorrichtung (106) nach Anspruch 6, **dadurch gekennzeichnet, dass** das Mittel (500) für die Gewichtskompensation mit einem ersten Ende (502) an dem Festteil (102) anordenbar oder angeordnet ist oder an dem ersten Synchronisierungselement (116) angeordnet ist und mit einem zweiten Ende (504) an dem Faltteil (104) anordenbar oder angeordnet ist oder an dem zweiten Synchronisierungselement (118) angeordnet ist.

8. Die Vorrichtung (106) nach Anspruch 7, **dadurch gekennzeichnet, dass** die Vorrichtung (106) einen Kettentrieb (600) umfasst, wobei der Kettentrieb (600) ein erstes Kettenrad (602) und ein zweites Kettenrad (604) sowie eine Kette (606), die eine Koppelung des ersten und zweiten Kettenrads (602; 604) bewirkt, umfasst, wobei das erste Kettenrad (602) drehbar an dem Festteil (102) oder dem ersten Synchronisierungselement (116) angeordnet ist und das zweite Kettenrad (604) starr an dem Faltteil (104) oder dem zweiten Synchronisierungselement (118) angeordnet ist.

9. Die Vorrichtung (106) nach Anspruch 8, **dadurch gekennzeichnet, dass** das Mittel (500) für die Gewichtskompensation mit dem ersten Ende (502) an dem Festteil (102) und mit dem zweiten Ende (504) an dem ersten Kettenrad (602) angeordnet ist.

10. Die Vorrichtung (106) nach Anspruch 6, **dadurch gekennzeichnet, dass** die Vorrichtung (106) ein Zahnradpaar umfasst, wobei ein erstes Zahnrad des Zahnradpaars drehbar an dem Festteil (102) angeordnet ist und ein zweites Zahnrad des Zahnradpaars starr an dem Faltteil (104) angeordnet ist, wobei das erste und das zweite Zahnrad in Eingriff stehen.

11. Die Vorrichtung nach Anspruch 10, **dadurch gekennzeichnet, dass** das Mittel (500) für die Gewichtskompensation mit dem ersten Ende (502) an dem Festteil (102) und dem zweiten Ende (504) an dem ersten Zahnrad angeordnet ist.

12. Die Vorrichtung (106) nach Anspruch 6, **dadurch gekennzeichnet, dass** die Vorrichtung (106) eine Koppel (702), insbesondere zwei Koppelstangen (702; 704), und eine Koppelplatte (708) umfasst, wobei die Koppel (702) mit einem ersten Ende an der Koppelplatte (708) angeordnet ist und mit einem zweiten Ende an dem zweiten Synchronisierungselement (118) oder dem Faltteil (104) angeordnet ist, wobei die Koppelplatte (708) drehbar an dem Festteil (102) oder dem ersten Synchronisierungselement (116) angeordnet ist.

13. Die Vorrichtung (106) nach Anspruch 12, **dadurch gekennzeichnet, dass** das Mittel (500) für die Gewichtskompensation mit dem ersten Ende (502) an dem Festteil (102) und mit dem zweiten Ende (504) an der Koppelplatte (708) angeordnet ist.

14. Die Vorrichtung (106) nach Anspruch 13, **dadurch gekennzeichnet, dass** das Mittel (500) für die Gewichtskompensation des Faltteils (104) einen Antrieb umfasst, insbesondere einen Spindelantrieb, der ausgebildet ist das Doppelgelenk (112) mittels der Koppel (702) anzutreiben.

15. Die Vorrichtung (106) nach Anspruch 12, **dadurch gekennzeichnet, dass** die Koppelplatte (708) als ein Kurvensegment ausgebildet ist.

16. Die Vorrichtung (106) nach Anspruch 15, **dadurch gekennzeichnet, dass** das Mittel (500) für die Gewichtskompensation mit dem ersten Ende (502) an dem Festteil (102) angeordnet ist und das zweite Ende (504) entlang einer Kurve des Kurvensegments geführt bewegbar angeordnet ist.

17. Faltbare Plattform (100), wobei die faltbare Plattform (100) einen Festteil (102) und einen Faltteil (104) und die Vorrichtung (106) nach einem der Ansprüche 1 bis 16 umfasst.

18. Faltbare Plattform (100) nach Anspruch 17, wobei die faltbare Plattform (100) zumindest ein weiteres Faltteil (104) und zumindest eine weitere Vorrichtung (106) nach einem der Ansprüche 1 bis 16 umfasst.
